# EUROPÄISCHE PATENTANMELDUNG

(11) **EP 2 404 650 A1**
(43) Veröffentlichungstag der Anmeldung: **11.01.2012**
(21) Anmeldenummer: 10169032.9
(22) Anmeldetag: 09.07.2010
(51) Int. Cl.: B01D 39/08, D04H 1/42

(54) **Vorrichtung und Verfahren zur Fest-/Flüssig-Trennung von Fest-Flüssig-Suspensionen**

(71) Anmelder: Bayer MaterialScience AG, 51368 Leverkusen (DE)
(72) Erfinder: Münnich, Christian, Dr., 51377 Leverkusen (DE); Köhler, Karl-Heinz, Dr., 52078 Aachen-Brand (DE); Westernacher, Stefan, Dr., 47906 Kempen (DE)

(57) **Zusammenfassung**

Gegenstand der Erfindung ist eine Vorrichtung und ein Verfahren zur kontinuierlichen Fest-/Flüssig-Trennung (Filtration) von Fest-Flüssig-Suspensionen auf bewegten Filtern beispielsweise auf rotierenden Trommelfiltern, oder Bandfiltern, wobei die aktive Filterschicht ein Gewebematerial aus synthetischen Fasern enthält, das eine erhöhte Filtrat-Durchlässigkeit sowie eine erhöhte Temperaturbeständigkeit mit verbesserter Maßhaltigkeit besitzt, sowie verbesserte mechanische Festigkeit im Vergleich zu Polypropylen-Fasern aufweist.

## Beschreibung

Gegenstand der Erfindung ist eine Vorrichtung und ein Verfahren zur kontinuierlichen Fest-/Flüssig-Trennung (Filtration) von Fest-Flüssig-Suspensionen auf bewegten Filtern, beispielsweise auf rotierenden Trommelfiltern oder Bandfiltern, wobei die aktive Filterschicht ein Gewebematerial aus synthetischen Fasern enthält, das eine erhöhte Filtrat-Durchlässigkeit sowie eine erhöhte Temperaturbeständigkeit bis 130°C mit verbesserter Maßhaltigkeit besitzt, sowie verbesserte mechanische Festigkeit im Vergleich zu Polypropylen-Fasern aufweist. Das Gewebematerial enthält Fasern ausgewählt aus der Gruppe von Ethylen-Chlor-tri-Fluor-ethylen-copolymeren (E-CTFE), Polytetrafluorethylen (PTFE) und Polyetheretherketon (PEEK), und ist auf der Außenseite der Filtertrommel mit Klemmvorrichtungen nach dem Nut-Feder-Prinzip befestigt. Die sogenannte Standzeit des erfindungsgemäßen Filtergewebes bis zum verschleißbedingten Austausch dieses Filtergewebes ist gegenüber einem herkömmlichen Filtergewebe aus Polypropylen (PP) deutlich erhöht.

Die Filtration von Suspensionen aus Bisphenol A (BPA)-Phenol-Addukt-Kristallen in flüssigem Phenol auf Vakuum-Trommelfiltern ist bekannt und z.B. in WO 2001/046105 A1 beschrieben. Dort wird u.a. auch auf die Temperaturbeständigkeit des Filtermediums hingewiesen, ohne aber konkret geeignete Filtermaterialien zu nennen.

Temperaturbeständige Filtermaterialien aus PTFE bzw. modifiziertem PTFE, und aus Copolymeren von Ethylen mit Chlortrifluorethylen (E-CTFE), sowie die Herstellung von Filtern aus solchen Materialien sind bereits bekannt und z.B. in der US 5,213,882 A beschrieben. Allerdings handelt es sich dabei um nicht gewebte Faservliese, deren Eigenschaften nicht zwangsweise vergleichbar mit Gewebestoffen aus solchen Fasermaterialien sind. Auf mechanische Beständigkeiten oder Permeabilitäten von solchen Filtern gibt es in der Veröffentlichung keine Hinweise.

Auch Filtermaterialien aus PEEK-Fasern sind bekannt und z.B. in WO 99/19043 A1 beschrieben. Allerdings geht aus dieser Veröffentlichung nicht hervor, ob es sich um gewebte Filterstoffe handelt und welche mechanischen Eigenschaften oder Durchlässigkeiten solche Filter aufweisen.

Es bestand daher Bedarf nach Filtertüchern, die bei gleichem oder geringerem Feststoffdurchschlag einen erhöhten Durchsatz an Filtrat ermöglichen und gleichzeitig gegenüber bekannten Filtertüchern aus Polypropylengewebe für ständig wiederkehrende Reinigungszwecke eine erhöhte Temperaturbeständigkeit gegenüber Wasserdampf von 2 - 5 bar Druck, sowie eine ausreichende Dimensionsstabilität bei diesen Temperaturen und verbesserte mechanische Festigkeiten aufweisen. Im Fall von rotierenden Trommelfiltern bedeutet dies insbesondere, dass während der Betriebszeit des Filtertuchs keine Risse an den Befestigungsstellen des Filtertuches auf der Filtertrommel auftreten, die nach dem Nut-Feder-Prinzip gestaltet sind und die durch die höheren Winkelbiegungen im Bereich der Befestigung eine besondere mechanische Belastung oder Schwachstelle des Filtertuchs darstellen können. Die mechanische Festigkeit des Filtertuchs ist insofern von Bedeutung, da Trommelfilter kontinuierlich bewegt und mit unterschiedlichen Drucken beaufschlagt werden, und da weiterhin der entstehende Filterkuchen kontinuierlich mechanisch von der Tuchoberfläche abgeschabt wird. Diese mechanische Beanspruchung ist im Gegensatz zu statischen Filtern von erheblicher Auswirkung auf die Nutzungsdauer des Filtertuchs; sie sollte gegenüber den bisher verwendeten Polypropylen-Filtertüchern von ca. 1 Jahr auf ca. 5 Jahre verlängert sein. Ebenso sollte die Filtrat-Permeabilität des verbesserten Filtertuchs gegenüber Polypropylen-Filtertüchern mindestens gleich gut, ggf. auch besser sein.

Aufgabe der Erfindung war daher die Bereitstellung eines verbesserten Filtertuchs für bewegte Filter beispielsweise rotierende Trommelfiltern, oder Bandfilter, zur kontinuierlichen Filtration von Suspensionen aus Bisphenol-Phenol-Addukt-Kristallen in flüssigem Phenol mit den oben genannten Vorteilen gegenüber aus dem Stand der Technik bekannten Filtertüchern. Insbesondere wurde durch die in dieser Erfindung beschriebenen Filtertücher die Durchlässigkeit für das Phenol-Filtrat deutlich erhöht bei gleich gutem oder gar verbessertem Feststoffdurchschlag.

Die erfinderische Aufgabe wurde überraschenderweise dadurch gelöst, dass speziell gewebte Filtertücher aus PEEK bzw. Fluor-haltigen Ethylen-Copolymeren mit ähnlichen oder gar geringeren Luftdurchlässigkeiten als denen der bisher verwendeten Polypropylen-Filtertücher eingesetzt werden. Überraschenderweise besitzen diese Filtertücher bei der Filtration von Suspensionen aus Bisphenol-Phenol-Addukt-Kristallen in flüssigem Phenol auf bewegten Filtern eine höhere Durchlässigkeit für das Phenol-Filtrat, als die bisher verwendeten Polypropylen-Filtertücher, obwohl die Luftdurchlässigkeit der erfindungsgemäß eingesetzten Filtertücher gemessen in [L/dm² x min] kleiner als die der Polypropylen-Filtertücher ist. Abgesehen von der verbesserten Temperaturbeständigkeit weisen die erfindungsgemäßen Filtertücher eine bessere mechanische Beständigkeit und Verzugsfreiheit bei erhöhter Temperatur auf.

In dieser Anmeldung bedeutet Bisphenol ein Bis(4-hydroxyaryl)alkan.

Gegenstand der Erfindung ist daher eine Vorrichtung und ein Verfahren zur kontinuierlichen Filtration von Fest-Flüssig-Suspensionen auf kontinuierlichen Filtrationsapparaten, insbesondere mit bewegten Filtern und bevorzugt auf rotierenden Trommelfiltern, insbesondere zur kontinuierlichen Filtration von Suspensionen aus Bisphenol-Phenol-Addukt-Kristallen in flüssigem Phenol auf bewegten Filtern. Die Vorrichtung besteht aus einem an sich bekannten bewegten Filter und dem auf diesem bewegten Filter erfindungsgemäß eingesetzten Filtertuch, das unten näher beschrieben wird. Das Verfahren besteht in der Verwendung der obigen Vorrichtung zur kontinuierlichen Filtration von Suspensionen aus Bisphenol-Phenol-Addukt-Kristallen in flüssigem Phenol, die in einem Prozess zur Herstellung von Bisphenol anfallen.

Ein Beispiel für in dieser Erfindung eingesetzten bewegten Filter ist der Vakuum-Trommelfilter TSF von der Firma Krauss Maffei, beschrieben in der WO 2001/046105 A1. Vorzugsweise enthält ein solcher Trommelfilter als Filterzellen eine Ansaugzone, eine Waschzone, eine Trockensaugzone, eine Belüftungszone und gegebenenfalls eine Filterkuchenabnahmezone und eine Tuchspülungszone. Das Filtertuch liegt dann auf der Filtertrommel auf dem für das Filtrat durchlässige Stützelement für das Filtertuch auf und ist dort mit Seilen aus synthetischen Fasern oder vorzugsweise korrosionsbeständigen Metallfedern oder einer Kombination davon nach dem Nut-Feder-Prinzip verspannt und befestigt. Die Stirnflächen des Trommelfilters werden vorzugsweise nicht als Filterflächen genutzt. Die Funktionsweise eines solchen Vakuum-Trommelfilters ist in der WO 2001/046105 A1 ausführlich erläutert. Andere Filteranordnungen sind aber verwendbar, wie, z.B. Druckdrehfilter, Bandfilter, Scheibenfilter, Tellerfilter oder Planfilter.

Die erfindungsgemäß verbesserten Filtertücher z.B. für einen Vakuum-Trommelfilter sind Gewebe aus der Gruppe Ethylen-Chlor-tri-Fluor-ethylen-copolymeren (E-CTFE), Polytetrafluorethylen (PTFE) und Polyetheretherketon (PEEK), vorzugsweise Gewebe aus E-CTFE. Diese Filtertücher weisen auch verbesserte Eigenschaften gegenüber metallischen Filtertücher oder Filtermaterialien aus beständigen metallischen Werkstoffen auf.

Die erfindungsgemäß eingesetzten Filtertücher sind Gewebe aus Kettfäden und Schussfäden, die beispielsweise in der Köperbindung oder der Tressebindung oder der Satinbindung gewebt sein können; bevorzugt ist die Köperbindung. Die Dicke der Fasern kann von 300 bis 1000 µm variieren; bevorzugt sind Fasern von ca. 600 µm bis 800 µm bei einem Gewebegewicht von 500 bis 600 g/m². Die Luftdurchlässigkeit des Filtertuchgewebes bei einem Druck von 20 mm Wassersäule kann von 90 bis 1500 [L/dm² x min] variieren, bevorzugt sind Luftdurchlässigkeiten von 500 bis 1300 [L/dm² x min]. Das Filtertuch kann ggf. ein- oder mehrmals kalandriert sein.

Diese erfindungsgemäß verwendeten Filtertücher weisen eine hohe Maßhaltigkeit auch bei erhöhter Temperaturbelastung von 130°C über einen Zeitraum von 48 Stunden auf. Vergleichbare Filtertücher aus Polypropylen zeigen unter gleichen Bedingungen deutliche Schrumpfungen in Quer- und Längsrichtung des Filterbandes. Die erfindungsgemäßen Filtertücher können daher mit Wasserdampf bei höherer Temperatur intensiver und damit in höheren Zeitabständen gereinigt werden, was die zeitliche Verfügbarkeit der gesamten Filtereinrichtung erhöht.

Auch die Wasserdurchlässigkeit der erfindungsgemäß eingesetzten Filtertücher als zusätzliches Maß für die Permeabilität der erfindungsgemäßen Filtertücher ist kleiner als bei den vergleichbaren Polypropylen-Filtertüchern und korreliert somit mit der Luftdurchlässigkeit. Trotz der geringeren Permeabilität erlauben die erfindungsgemäßen Filtertücher einen höheren Durchsatz der phenolischen Bisphenol A haltigen Suspensionen auf dem gleichen Vakuum-Trommelfilter bei sonst gleichen Prozessparametern bei Einsatz der erfindungsgemäßen Filtertücher anstelle von der Vergleichs-Polypropylen-Filtertüchern.

Die Filtrationseigenschaften, gemessen am Bisphenol-Gehalt des Filterkuchens, entsprechen bei den erfindungsgemäß eingesetzten Filtertüchern unter vergleichbaren Bedingungen denen der Polypropylen-Filtertücher.

Das erfindungsgemäße Verfahren zur kontinuierlichen Filtration von Suspensionen aus Bisphenol-Phenol-Addukt-Kristallen in flüssigem Phenol besteht in dem Einsatz von bewegten Filtern unter Verwendung der oben beschriebenen Filtertücher zur Trennung dieser Suspensionen. Dieses Verfahren hat gegenüber aus dem Stand der Technik bekannten Verfahren, wie beispielsweise dem in WO 2001/046105 A1 beschriebenen Verfahren, den Vorteil einer erhöhten Durchlässigkeit, der längeren zeitlichen Verfügbarkeit durch Verringerung der Reinigungs- und Inspektionsintervalle des Filtertuchs auf dem bewegten Filter, durch Vermeidung von Rissen und sonstigen mechanischen Beschädigungen des Filtertuchs. Dieses Verfahren hat den weiteren Vorteil der erhöhten Produktivität, bedingt durch den erhöhten Produktdurchsatz als Folge der verbesserten Filtrationseigenschaften.

Dieses erfindungsgemäße Verfahren ist Teil eines Herstell-Verfahrens für Bisphenol, das in WO 2001/046105 A1 ausführlich beschrieben ist.

Die Herstellung der Bis(4-hydroxyaryl)alkane erfolgt kontinuierlich oder diskontinuierlich, bevorzugt kontinuierlich an einem Katalysator, bevorzugt einem Ionenaustauscher in Festbettreaktoren für Kondensationsreaktionen.

Hergestellte Bis(4-hydroxyaryl)alkane sind beispielsweise solche der allgemeinen Formel (I), 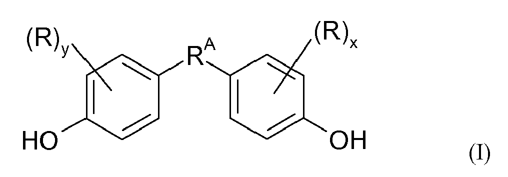 worin
- R^{A}: für einen linearen oder verzweigten C₁-C₁₈-Alkylenrest, bevorzugt C₁-C₆-Alkylenrest, oder einen C₅-C₁₈-Cycloalkylenrest, bevorzugt einen C₅-C₁₂-Cycloalkylenrest steht,
- R: unabhängig voneinander für einen linearen oder verzweigten C₁-C₁₈-Alkylrest, bevorzugt C₁-C₆-Alkylrest, einen C₅-C₁₈-Cycloalkylrest, bevorzugt einen C₅-C₁₂-Cycloalkylrest, einen C₆-C₂₄-Arylrest, bevorzugt einen C₆-C₁₂-Arylrest, oder einen Halogenrest stehen und
- x und y: unabhängig voneinander für 0 oder eine ganze Zahl von 1 bis 4, bevorzugt unabhängig voneinander für 0, 1 oder 2 stehen.

Bevorzugte Bis(4-hydroxyaryl)alkane sind 2,2-Bis-(4-hydroxyphenyl)propan (Bisphenol A (BPA)), 2,4-Bis-(4-hydroxyphenyl)-2-methylbutan, 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, 2,4-Bis-(3,5-dimethyl-4-hydroxyphenyl)-2-methylbutan, 1, 1-Bis-(4-hydroxyphenyl)-cyclohexan und 1,1-Bis-(4-hydroxyphenyl)-3,3,5-trimethylcyclohexan (Bisphenol TMC).

Besonders bevorzugte Bis(4-hydroxyaryl)alkane sind 2,2-Bis-(4-hydroxyphenyl)-propan (Bisphenol A (BPA)), 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).

Ganz besonders bevorzugt ist 2,2-Bis-(4-hydroxyphenyl)-propan (Bisphenol A).

Bis(4-hydroxyaryl)alkane sind nach dem Fachmann bekannten Verfahren erhältlich durch Umsetzung von aromatischen mono-Hydroxyverbindungen, die in p-Position nicht substituiert sind, mit Ketonen, die wenigstens eine aliphatische Gruppe an der Carbonylfunktion aufweisen, in einer Kondensationsreaktion. Dabei wird vorzugsweise als Zwischenprodukt ein Addukt des Bis(4-hydroxyaryl)alkans und der als Edukt eingesetzten aromatischen mono-Hydroxyverbindung erhalten, welche anschließend in das gewünschte Bis(4-hydroxyaryl)alkan und aromatische mono-Hydroxyverbindung getrennt wird.

Geeignete aromatische mono-Hydroxyverbindungen sind beispielsweise solche der allgemeinen Formel (II), 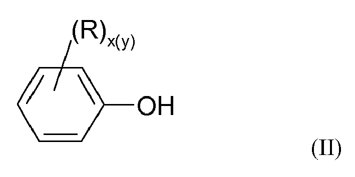 die in p-Position nicht substituiert sind und worin,
- R: unabhängig voneinander für einen linearen oder verzweigten C₁-C₁₈-Alkylrest, bevorzugt C₁-C₆-Alkylrest, einen C₅-C₁₈-Cycloalkylrest, bevorzugt einen C₅-C₁₂-Cycloalkylrest, einen C₆-C₂₄-Arylrest, bevorzugt einen C₆-C₁₂-Arylrest, oder einen Halogenrest stehen und
- x oder y: für 0 oder eine ganze Zahl von 1 bis 4, bevorzugt für 0, 1 oder 2 stehen.

Beispiele für geeignete aromatische mono-Hydroxyverbindungen der allgemeinen Formel (II) sind beispielsweise Phenol, o-und m-Kresol, 2,6-Dimethylphenol, o-tert.-Butylphenol, 2-Methyl-6-tert.-butylphenol, o-Cyclohexylphenol, o-Phenyl-phenol, o-Isopropylphenol, 2-Methyl-6-cyclopentylphenol, o-und m-Chlorphenol oder 2,3,6-Trimethylphenol. Bevorzugt sind Phenol, o-und m-Kresol, 2, 6-Dimethylphenol, o-tert.-Butylphenol und o-Phenyl-phenol, ganz besonders bevorzugt ist Phenol.

Geeignete Ketone sind beispielsweise solche der allgemeinen Formel (III), 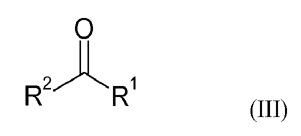 worin
- R¹: für einen linearen oder verzweigten C₁-C₁₈-Alkylrest, bevorzugt C₁-C₆-Alkylrest, steht und
- R²: für einen linearen oder verzweigten C₁-C₁₈-Alkylrest, bevorzugt C₁-C₆-Alkylrest, oder einen C₆-C₂₄-Arylrest, bevorzugt einen C₆-C₁₂-Arylrest, steht oder
- R¹ und R²: zusammen für einen linearen oder verzweigten C₂-C₁₈-Alkylrest, bevorzugt C₂-C₁₂-Alkylrest stehen.

Beispiele für geeignete Ketone der allgemeinen Formel (III) sind Aceton, Methylethylketon, Methylpropylketon, Methylisopropylketon, Diethylketon, Acetophenon, Cyclohexanon, Cyclopentanon, Methyl-, Dimethyl- und Trimethylcyclohexanonen, die auch geminale Methylgruppen aufweisen können, z.B. 3,3-Dimethyl-5-methylcyclohexanon (Hydroisophoron). Bevorzugte Ketone sind Aceton, Acetophenon, Cyclohexanon und dessen Methylgruppen tragende Homologe, besonders bevorzugt ist Aceton.

C₁-C₆-Alkyl steht beispielsweise für Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl oder 1-Ethyl-2-methylpropyl, C₁-C₁₈-Alkyl darüber hinaus beispielsweise für darüber hinaus beispielsweise für n-Heptyl und n-Octyl, Pinakyl, Adamantyl, die isomeren Menthyle, n-Nonyl, n-Decyl, n-Dodecyl, n-Tridecyl, n-Tetradecyl, n-Hexadecyl, n-Octadecyl oder Stearyl.

C₁-C₆-Alkylen bzw. C₁-C₁₈-Alkylen steht beispielsweise für die den vorangehenden Alkylgruppen entsprechenden Alkylengruppen.

C₅-C₁₂₋Cycloalkyl steht beispielsweise für Cylopentyl, Cyclohexyl, Cyclooctyl oder Cyclododecyl.

Beispiele für C₆-C₂₄-Aryl oder C₆-C₁₂-Aryl sind Phenyl, o-, p-, m-Tolyl, Naphthyl, Phenanthrenyl, Anthracenyl oder Fluorenyl.

Halogen kann für Fluor, Chlor, Brom oder Iod, bevorzugt für Fluor oder Chlor, besonders bevorzugt für Chlor stehen.

Die folgenden Beispiele dienen der exemplarischen Erläuterung der Erfindung und sind nicht als Beschränkung aufzufassen.

### Beispiele

In den erfindungsgemäßen Beispielen wurden folgende Filtertücher verwendet:
SEFAR TETEXMONO 08-1033-W 115 (E-CTFE)
SEFAR TETEXMONO 17-2032-W 155 (PEEK)
wobei E-CTFE Ethylen-Chlor-tri-Fluor-ethylen-copolymeren und PEEK Polyetheretherketon bedeutet.

Das Filtertuch vom Typ PP2763 (1200 L/(dm² · min)), bestehend aus Polyproplylen (PP), der Fa. Verseidag wurde für die Vergleichsbeispiele herangezogen, ebenso der Metallfilter vom Typ SPW40; mesh 80x400 aus 1.4306 (X2CrNi19-11, AISI 304L) der Fa. Haver und Boecker.

Die Bestimmung der Wasserdurchlässigkeit erfolgte in einer eigens hierzu aufgebauten Laborapparatur. Hierzu wurde eine definierte Menge (5000 ml) temperierten Wassers in einer temperierten hydrostatischen Säule oberhalb einer zu durchströmenden senkrechten Messstrecke vorgelegt. In die zu durchströmende senkrechte Messstrecke wurde das zu testende Filtertuch in einer definierten freien Querschnittsfläche so eingebracht, dass der Hauptströmungswiderstand der Messanordnung durch das in der definierten zu durchströmenden Querschnittsfläche installierte Filtertuch vorgegeben ist. Messgröße der Filtertuchtestung ist die Zeit, die die Wassermenge benötigt, um aus der temperierten hydrostatischen Säule auszulaufen.

Die im Weiteren ausführlich dargestellten Beispiele 1 bis 6 sind in der folgenden Tabelle 1 zusammengefasst.

**Tabelle 1: Vergleichende Übersicht der Beispiele**

| **Beispiel** | **1*** | **2** | **3*** |
|---|---|---|---|
| Filtration | Drehfilter | Drehfilter | Nutsche |
| Hersteller | Sefar | Verseidag | Sefar |
| Filtertuch-Typ | TETEXMONO 08-1033-W 115 | PP2763 | TETEXMONO 08-1033-W 115 |
| Filtermaterial | E-CTFE | PP | E-CTFE |
| Luftdurchlässigkeit in L/(dm² min) | 1080 | 1200 | 1080 |
| Wasserdurchlässigkeit/ -durchlaufzeit | 121 s | 102 s | 121 s |
| Maßhaltigkeit in Luft bei 130°C für 48h | Dimensionsstabil | Schrumpfung um ca. 10 % in x und y Dimension | Dimensionsstabil |
| Drehfilter: Bisphenol A Gehalt im Filtrat (Kontinuierliche Filtration) | 8,8 Gew.-% | 9,0 Gew.-% | N.A. |
| Nutsche: Bisphenol A Gehalt im Filtrat (Handfiltration auf Saug-Nutsche) | N.A. | N.A. | 9,4% |

| **Beispiel** | **4*** | **5** | **6** |
|---|---|---|---|
| Filtration | Nutsche | Nutsche | Nutsche |
| Hersteller | Sefar | Verseidag | Haver und Boecker |
| Filtertuch-Typ | TETEXMONO 17-2032-W 155 | PP2763 | Filtertyp SPW40; mesh 80x400 |
| Filtermaterial | PEEK | PP | 1.4306 |
| Luftdurchlässigkeit in L/(dm² min) | 1200 | 1200 | |
| Wasserdurchlässigkeit/-durchlaufzeit | 124 s | 102 s | 129 s |
| Maßhaltigkeit in Luft bei 130°C für 48 h | Dimensionsstabil | Schrumpfung um ca. 10 % in x und y Dimension | Dimensionsstabil |
| Drehfilter: Bisphenol A Gehalt im Filtrat (Kontinuierliche Filtration) | N.A. | N.A. | N.A. |
| Nutsche: Bisphenol A Gehalt im Filtrat (Handfiltration auf Saug-Nutsche) | 9,4 % | 9,6% | 10,0 % |

| | | | |
|---|---|---|---|
| *: erfindungsgemäß | | | |

### Beispiel 1 (erfindungsgemäß)

Die bei der säurekatalysierten Umsetzung von Phenol und Aceton mit anschließender Suspensionskristallisation anfallenden BPA/Phenol-Adduktkristalle werden durch ein Drehfilter von der Flüssigphase abgetrennt und der weiteren Reinigung zugeführt. Hierzu werden ein Feststoffanteil im Zulaufstrom von 25 Gew.-% und eine Zulauftemperatur in den Drehfilter von 41°C eingestellt. Filtriert wird auf einem phenol- und temperaturbeständigen Filtertuch TETEXMONO 08-1033-W 115 der Fa. Sefar mit einer Luftdurchlässigkeit von 1080 L/dm²/Min. Die Vakua in der Ansaugzone betragen 100 mbar, in der Waschzone 300 mbar und in der Trockensaugzone 300 mbar. Das Drehfiltergehäuse wird dabei unter einem leichtem Überdruck von 10 mbar mit Stickstoff inertisiert. Trommeldrehzahl, Filterkuchendicke, Kreislaufstickstoffmenge und die Ansaugöffnungen der Steuerscheibe sind so eingestellt, dass die Restfeuchte im Filterkuchen < 15 Gew.-% bezogen auf die Mischkristallmenge beträgt. Der Drehfilter kann mit einem Zulaufstrom von bis zu ca. 3,3 t / (h · pro m²-Filterfläche) stabil betrieben werden.

Für die Spülung des Filterkuchens in der Waschzone wird reines Phenol mit einer Temperatur von 55°C eingesetzt, wobei die Spülmenge für die Filterkuchenreinigung 100 %, bezogen auf die Filterkuchenmenge, beträgt.

Für die Filtertuchspülung wird Phenol mit einer Temperatur von 80°C eingesetzt, wobei die Spülmenge zur Tuchspülung, bezogen auf die Menge des Filterkuchens, 80 Gew.-% beträgt. Durch diese Art der Filtration wird ein BPA-Phenoladdukt mit hohen Reinheiten (>99% ohne Phenolanteil) erhalten.

Der Bisphenol A Gehalt im Filtrat beträgt ca. 8,8 Gew.-%.

### Beispiel 2 (Vergleichsbeispiel)

Unter identischen Parametern wie in Beispiel 1 ausgeführt wird der gleiche Drehfilter betrieben, der im Gegensatz zu Beispiel 1 mit einem Filtertuch PP2763 der Fa. Verseidag ausgerüstet ist.

Unter sonst identischen Prozessparametern kann der Drehfilter bis zu einem maximalen Zulaufstrom von bis zu ca. 2,7 t / (h · pro m²-Filterfläche) stabil betrieben werden. Ein höherer Zulaufstrom führt zu einem kontinuierlichen Anstieg des Suspensionsstandes in der Drehfilterwanne, der schließlich zum vollständigen Fluten des Apparates führen würde.

Durch diese Art der Filtration wird ebenfalls ein BPA-Phenoladdukt mit hohen Reinheiten (>99% ohne Phenolanteil) erhalten.

Der Bisphenol A Gehalt im Filtrat beträgt ca. 9,0 Gew.-%.

### Beispiel 3 (erfindungsgemäß)

Die bei der säurekatalysierten Umsetzung von Phenol und Aceton mit anschließender Suspensionskristallisation anfallenden BPA/Phenol-Adduktkristalle werden durch eine temperierte Filternutsche von der Flüssigphase abgetrennt. Bei der batchweise durchgeführten Filtration werden ein Feststoffanteil in der Suspension von 25 Gew.-% und eine Suspensionstemperatur von 41°C eingestellt. Die Filternutsche wird auf ebenfalls auf 41 °C temperiert. Filtriert wird auf einem phenol- und temperaturbeständigen Filtertuch TETEXMONO 08-1033-W 115 der Fa. Sefar mit einer Luftdurchlässigkeit von 1080 L/dm²/min. Eingesetzt werden ca. 2 m³ der BPA/Phenol-Adduktkristall haltigen Suspensionen pro m² Filtertuchfläche. Das Vakuum in der Ansaugzone beträgt ca. 100 mbar.

Der Filterkuchen wird mit reinem Phenol, das auf 60°C temperiert ist, gewaschen, wobei die Spülmenge für die Filterkuchenreinigung 100 %, bezogen auf die Filterkuchenmenge, beträgt.

Der gewaschene Filterkuchen wird bis zu einer Restfeuchte von ca. 15 % trocken gesaugt und analysiert.

Durch diese Art der Filtration wird ein BPA-Phenoladdukt mit hohen Reinheiten (>99% ohne Phenolanteil) erhalten.

Der Bisphenol A Gehalt im Filtrat beträgt ca. 9,4 Gew.-%.

### Beispiel 4 (erfindungsgemäß)

Die bei der säurekatalysierten Umsetzung von Phenol und Aceton mit anschließender Suspensionenskristallisation anfallenden BPA/Phenol-Adduktkristalle werden durch eine temperierte Filternutsche von der Flüssigphase abgetrennt. Bei der batchweise durchgeführten Filtration werden ein Feststoffanteil in der Suspensionen von 25 Gew.-% und eine Suspensionenstemperatur von 41°C eingestellt. Die Filternutsche wird auf ebenfalls auf 41 °C temperiert. Filtriert wird auf einem phenol- und temperaturbeständigen Filtertuch TETEXMONO 17-2032-W 155 der Fa. Sefar mit einer Luftdurchlässigkeit von 1200 L/dm²/min. Eingesetzt werden ca. 2 m³ der BPA/Phenol-Adduktkristall-haltigen Suspensionen pro m² Filtertuchfläche.

Das Vakuum in der Ansaugzone beträgt ca. 100 mbar. Der Filterkuchen wird mit reinem Phenol, das auf 60°C temperiert ist, gewaschen, wobei die Spülmenge für die Filterkuchenreinigung 100 %, bezogen auf die Filterkuchenmenge, beträgt. Der gewaschene Filterkuchen wird bis zu einer Restfeuchte von ca. 15 % trocken gesaugt und analysiert.

Durch diese Art der Filtration wird ein BPA-Phenoladdukt mit hohen Reinheiten (>99% ohne Phenolanteil) erhalten.

Der Bisphenol A Gehalt im Filtrat beträgt ca. 9,4 Gew.-%.

### Beispiel 5 (Vergleichsbeisipiel)

Die bei der säurekatalysierten Umsetzung von Phenol und Aceton mit anschließender Suspensionenskristallisation anfallenden BPA/Phenol-Adduktkristalle werden durch eine temperierte Filternutsche von der Flüssigphase abgetrennt. Bei der batchweise durchgeführten Filtration werden ein Feststoffanteil in der Suspensionen von 25 Gew.-% und eine Suspensionenstemperatur von 41°C eingestellt. Die Filternutsche wird auf ebenfalls auf 41 °C temperiert. Filtriert wird auf einem phenol- und temperaturbeständigen Filtertuch PP2763 der Fa. Verseidag mit einer Luftdurchlässigkeit von 1200 L/dm²/min. Eingesetzt werden ca. 2 m³ der BPA/Phenol-Adduktkristall-haltigen Suspension pro m² Filtertuchfläche.

Das Vakuum in der Ansaugzone beträgt ca. 100 mbar. Der Filterkuchen wird mit reinem Phenol, das auf 60°C temperiert ist, gewaschen, wobei die Spülmenge für die Filterkuchenreinigung 100 %, bezogen auf die Filterkuchenmenge, beträgt. Der gewaschene Filterkuchen wird bis zu einer Restfeuchte von ca. 15 % trocken gesaugt und analysiert.

Durch diese Art der Filtration wird ein BPA-Phenoladdukt mit hohen Reinheiten (>99% ohne Phenolanteil) erhalten.

Der Bisphenol A Gehalt im Filtrat beträgt ca. 9,6 Gew.-%.

### Beispiel 6 (Vergleichsbeispiel)

Die bei der säurekatalysierten Umsetzung von Phenol und Aceton mit anschließender Suspensionskristallisation anfallenden BPA/Phenol-Adduktkristalle werden durch eine temperierte Filternutsche von der Flüssigphase abgetrennt. Bei der batchweise durchgeführten Filtration werden ein Feststoffanteil in der Suspension von 25 Gew.-% und eine Suspensionstemperatur von 41°C eingestellt. Die Filternutsche wird auf ebenfalls auf 41 °C temperiert. Filtriert wird auf einem phenol- und temperaturbeständigen Metallfilter SPW40, mesh 80x400, Werkstoff 1.4306 der Fa. Haver und Boecker. Eingesetzt werden ca. 2 m³ der BPA/Phenol-Adduktkristall-haltigen Suspension pro m² Filtertuchfläche.

Das Vakuum in der Ansaugzone beträgt ca. 100 mbar. Der Filterkuchen wird mit reinem Phenol, das auf 60°C temperiert ist, gewaschen, wobei die Spülmenge für die Filterkuchenreinigung 100 %, bezogen auf die Filterkuchenmenge, beträgt. Der gewaschene Filterkuchen wird bis zu einer Restfeuchte von ca. 15 % trocken gesaugt und analysiert.

Durch diese Art der Filtration wird ein BPA-Phenoladdukt mit hohen Reinheiten (>99% ohne Phenolanteil) erhalten.

Der Bisphenol A Gehalt im Filtrat beträgt ca. 10,0 Gew.-%.

## Patentansprüche

1. Vorrichtung zur kontinuierlichen Filtration von Fest-Flüssig-Suspensionen auf kontinuierlichen Filtrationsapparaten, **dadurch gekennzeichnet, dass** die aktive Filterschicht ein Gewebematerial aus synthetischen Fasern enthält, ausgewählt aus der Gruppe von Ethylen-Chlor-tri-Fluor-ethylen-copolymeren (E-CTFE), Polytetrafluorethylen (PTFE) und Polyetheretherketon (PEEK).

2. Vorrichtung nach Anspruch 1, **dadurch gekennzeichnet, dass** die aktive Filterschicht auf der zylindrischen Seite des bewegten Filters liegt.

3. Vorrichtung nach Anspruch 2, **dadurch gekennzeichnet, dass** die Filtration auf rotierenden Trommelfiltern erfolgt.

4. Vorrichtung nach einem der Ansprüche 1 bis 3, **dadurch gekennzeichnet, dass** die Dicke der Fasern im Bereich von 300 und 1000 µm liegt.

5. Vorrichtung nach einem der Anspruche 1 bis 4, **dadurch gekennzeichnet, dass** die Luftdurchlässigkeit des Filtertuchgewebes bei einem Druck von 20 mm Wassersäule im Bereich von 90 bis 1500 [L/dm² x min] liegt.

6. Verwendung einer Filterschicht enthaltend ein Gewebematerial aus synthetischen Fasern, ausgewählt aus der Gruppe von Ethylen-Chlor-tri-Fluor-ethylen-copolymeren (E-CTFE), Polytetrafluorethylen (PTFE) und Polyetheretherketon (PEEK) zur kontinuierlichen Filtration von Fest-Flüssig-Suspensionen auf kontinuierlichen Filtrationsapparaten

7. Verwendung nach Anspruch 6, zur kontinuierlichen Filtration von Suspensionen aus Bisphenol-Phenol-Addukt-Kristallen in flüssigem Phenol.

8. Verfahren zur Isolierung von Bisphenol-Phenol-Addukt-Kristallen aus einer Suspension von Bisphenol-Phenol-Addukt-Kristallen in flüssigem Phenol durch Filtration dieser Suspension mit einer Vorrichtung nach einem der Ansprüche 1 bis 5.

9. Verfahren nach Anspruch 8, **dadurch gekennzeichnet, dass** das Bisphenol folgender Formel (I) entspricht: 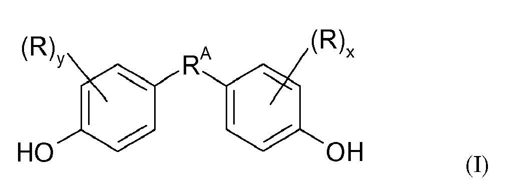 worin
R^{A} für einen linearen oder verzweigten C₁-C₁₈-Alkylenrest oder einen C₅-C₁₈-Cycloalkylenrest steht,
R unabhängig voneinander für einen linearen oder verzweigten C₁-C₁₈-Alkylrest, einen C₅-C₁₈-Cycloalkylrest, einen C₆-C₂₄-Arylrest oder einen Halogenrest stehen und
x und y unabhängig voneinander für 0 oder eine ganze Zahl von 1 bis 4 stehen.

10. Verfahren nach Anspruch 9, **dadurch gekennzeichnet, dass** das Bisphenol ausgewählt ist aus 2,2-Bis-(4-hydroxyphenyl)-propan (Bisphenol A (BPA)), 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC)
